(19) Europäisches Patentamt / European Patent Office / Office européen des brevets

(11) EP 4 299 654 A1

(12) EUROPEAN PATENT APPLICATION
published in accordance with Art. 153(4) EPC

(43) Date of publication:
03.01.2024 Bulletin 2024/01

(21) Application number: 22759838.0

(22) Date of filing: 25.02.2022

(51) International Patent Classification (IPC):
*C08J 5/04* *(2006.01)* *C08G 73/10* *(2006.01)*
*C08L 79/08* *(2006.01)*

(52) Cooperative Patent Classification (CPC):
C08G 73/10; C08J 5/04; C08L 79/08

(86) International application number:
PCT/JP2022/008069

(87) International publication number:
WO 2022/181804 (01.09.2022 Gazette 2022/35)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 25.02.2021 JP 2021029143

(71) Applicant: Mitsubishi Chemical Corporation
Chiyoda-ku
Tokyo 100-8251 (JP)

(72) Inventors:
- FURUHASHI Yuma
Tokyo 100-8251 (JP)
- OKADA Kazuya
Tokyo 100-8251 (JP)

(74) Representative: Hoffmann Eitle
Patent- und Rechtsanwälte PartmbB
Arabellastraße 30
81925 München (DE)

# (54) PREPREG AND PRODUCTION METHOD THEREFOR, AND MOLDED OBJECT

(57) A prepreg containing a matrix resin containing: a polyetherimide resin (A) having a repeating unit represented by General Formula (A); and carbon fibers, in which the matrix resin satisfies Condition (1). Condition (1): A tensile elongation at break (T1) of a film, obtained by extrusion-molding the matrix resin into a film shape, in a TD direction, and a tensile elongation at break (T2) of the film in the TD direction after immersing of the film for 1,000 hours in a specific oil at 23°C are measured, and a tensile elongation retention rate obtained by Expression (1) is 15% or greater and 90% or less. Tensile Elongation Retention Rate = (Tensile Elongation at Break (T2)/Tensile Elongation at Break (T1) × 100 ... (1) (in Formula (a), m is a number of 5 to 1,500.)

EP 4 299 654 A1

## Description

[Technical Field]

The present invention relates to a prepreg and a production method therefor, and a molded product.

Priority is claimed on Japanese Patent Application No. 2021-029143, filed in Japan on February 25, 2021, the contents of which is incorporated herein by reference.

[Background Art]

Engineering plastics represented by crystalline nylon 66 (PA66) resins and amorphous polycarbonate (PC) resins have excellent heat resistance and mechanical strength and are widely used as industrial components. In addition, super engineering plastics represented by crystalline polyether ether ketone (PEEK) resins and amorphous polyetherimide (PEI) resins have heat resistance and mechanical strength superior to those of the engineering plastics, and thus have been applied to substitute metal components.

For the purpose of further expanding the range of applications of engineering plastics and super engineering plastics, fiber-reinforced composite articles in which a matrix resin containing the above plastics is reinforced with reinforcing fibers have been proposed.

For example, Patent Document 1 and Patent Document 2 disclose a fiber-reinforced composite article such as a prepreg in which an amorphous thermoplastic resin is used as a matrix resin.

[Citation List]

[Patent Document]

[Patent Document 1] Japanese Unexamined Patent Application, First Publication No. 2004-107626
[Patent Document 2] Japanese Unexamined Patent Application, First Publication No. 2005-239843

[Summary of Invention]

[Technical Problem]

When a molded product obtained by molding a prepreg is used in aircrafts, automobiles, and the like, a chemical such as a hydraulic oil may adhere to the molded product, and it is required that mechanical characteristics can be maintained even with adhesion of the chemical.

An object of the present invention is to provide a fiber-reinforced thermoplastic resin prepreg from which a molded product having excellent chemical resistance and mechanical characteristics is obtained even with the use of an amorphous thermoplastic resin as a matrix resin and a production method therefor, and a molded product.

The present invention has the following aspects.

[1] A prepreg comprising: a matrix resin containing a polyetherimide resin (A) having a repeating unit represented by General Formula (a); and carbon fibers,
wherein the matrix resin satisfies Condition (1) including

(i) a film is produced by extrusion-molding the matrix resin into a film shape,
(ii) a tensile elongation at break (T1) of the film in a direction perpendicular to a longitudinal direction is measured according to JIS K 7127,
(iii) separately, the film produced in (i) is immersed for 1,000 hours in an oil containing 55 to 65 mass% of tributyl phosphate at 23°C, and then a tensile elongation at break (T2) of the film in the direction perpendicular to the longitudinal direction is measured according to JIS K 7127, and
(iv) a tensile elongation retention rate obtained by Expression (1) is 15% or greater and 90% or less.

$$\text{Tensile Elongation Retention Rate} = (\text{Tensile Elongation at Break (T2)}/\text{Tensile Elongation at Break (T1)}) \times 100 \ldots (1)$$

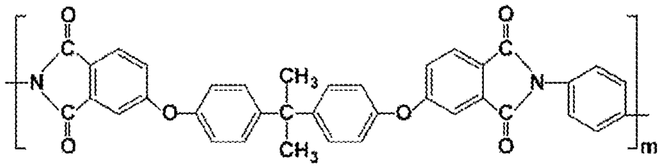

· · · (a)

In Formula (a), m is a number of 5 to 1,500.

[2] The prepreg according to [1], wherein the polyetherimide resin (A) includes a polyetherimide resin (A-1) having a melt volume rate of 3 to 10 $cm^3$/10 minutes at a set temperature of 360°C and a load of 5 kg as measured according to ISO 1133.

[3] The prepreg according to [2], wherein a content of the polyetherimide resin (A-1) is 85 mass% or greater with respect to a total mass of the matrix resin.

[4] The prepreg according to [2] or [3], wherein a content of the polyetherimide resin (A-1) is 95 mass% or less with respect to a total mass of the matrix resin.

[5] The prepreg according to any one of [1] to [4], wherein the polyetherimide resin (A) includes a polyetherimide resin (A-2) having a melt volume rate of 15 to 30 cm3/10 minutes at a set temperature of 360°C and a load of 5 kg as measured according to ISO 1133.

[6] The prepreg according to [5], wherein a content of the polyetherimide resin (A-2) is 5 mass% or greater with respect to a total mass of the matrix resin.

[7] The prepreg according to [5] or [6], wherein a content of the polyetherimide resin (A-2) is 15 mass% or less with respect to a total mass of the matrix resin.

[8] The prepreg according to any one of [1] to [7], wherein the carbon fibers are continuous fibers.

[9] The prepreg according to any one of [1] to [8], wherein in Formula (a), m is preferably a number of 10 to 1,000, more preferably 50 to 800, and even more preferably 100 to 600.

[10] The prepreg according to any one of [1] to [9], wherein the tensile elongation retention rate is preferably 20% or greater and 90% or less, more preferably 30% or greater and 90% or less, even more preferably 50% or greater and 90% or less, and still more preferably 70% or greater and 90% or less.

[11] The prepreg according to any one of [1] to [10], wherein a weight content of the matrix resin in the prepreg is preferably 15 to 70 wt%, more preferably 20 to 60 wt%, and even more preferably 25 to 45 wt%.

[12] The prepreg according to any one of [1] to [11], wherein a volume content (Vf) of the carbon fibers in the prepreg is preferably 20 to 75 vol%, more preferably 30 to 70 vol%, and even more preferably 45 to 65 vol% with respect to a total volume of the prepreg.

[13] The prepreg according to any one of [2] to [12], wherein a content of the polyetherimide resin (A-1) is preferably 30 mass% or greater and 100 mass% or less, more preferably 50 mass% or greater and 95 mass% or less, and even more preferably 70 mass% or greater and 95 mass% or less with respect to a total mass of the matrix resin.

[14] The prepreg according to any one of [5] to [13], wherein a content of the polyetherimide resin (A-2) is preferably 0 mass% or greater and 70 mass% or less, more preferably 5 mass% or greater and 50 mass% or less, and even more preferably 5 mass% or greater and 30 mass% or less with respect to a total mass of the matrix resin.

[15] The prepreg according to any one of [2] to [14], wherein a glass transition temperature (Tg) of the polyetherimide resin (A-1) is preferably 50°C to 500°C, more preferably 100°C to 300°C, and even more preferably 150°C to 250°C.

[16] The prepreg according to any one of [5] to [15], wherein a glass transition temperature (Tg) of the polyetherimide resin (A-2) is preferably 50°C to 500°C, more preferably 100°C to 300°C, and even more preferably 150°C to 250°C.

[17] The prepreg according to any one of [1] to [16], wherein the matrix resin contains two or more kinds of polyetherimide resins (A) having different melt volume rates at a set temperature of 360°C and a load of 5 kg as measured according to ISO 1133, and having a repeating unit represented by General Formula (a), and

a difference in melt volume rate represented by [melt volume rate of first polyetherimide resin] - [melt volume rate of second polyetherimide resin] is preferably 5 to 27, more preferably 7 to 20, and even more preferably 10 to 15.

[18] The prepreg according to any one of [1] to [17], wherein the polyetherimide resin (A) includes a polyetherimide resin (A-1) having a melt volume rate of 3 to 10 $cm^3$/10 minutes at a set temperature of 360°C and a load of 5 kg as measured according to ISO 1133, and a polyetherimide resin (A-2) having a melt volume rate of 15 to 30 cm3/10 minutes at a set temperature of 360°C and a load of 5 kg as measured according to ISO 1133, and

a difference in glass transition temperature represented by [glass transition temperature of the polyetherimide resin (A-2)] - [glass transition temperature of the polyetherimide resin (A-1)] is preferably 0°C to 20°C, more preferably 0°C to 10°C, and even more preferably 0°C to 5°C.

[19] The prepreg according to any one of [1] to [18], wherein the matrix resin may contain a polyetherimide resin (B) other than the polyetherimide resin (A), and a content of the polyetherimide resin (B) is preferably 0 mass% or greater and 5 mass% or less, more preferably 0 mass% or greater and 1 mass% or less, even more preferably 0

mass% or greater and 0.5 mass% or less, and particularly preferably substantially absent (that is, 0 mass%) with respect to a total mass of the matrix resin.

[20] The prepreg according to any one of [1] to [19], wherein a proportion of the repeating unit represented by General Formula (a) in 100 mass% of the polyetherimide resin (A) is preferably 50 to 100 mass%, more preferably 70 to 100 mass%, even more preferably 95 to 100 mass%, and particularly preferably 100 mass%.

[21] The prepreg according to any one of [1] to [20], wherein a 90°-bending strength measured by a method described in Examples is preferably 80 to 150 MPa, more preferably 90 to 130 MPa, and even more preferably 100 to 120 MPa.

[22] The prepreg according to any one of [1] to [21], wherein an in-plane shear strength retention rate measured by a method described in Examples is preferably 70% to 100%, more preferably 80% to 100%, and even more preferably 90% to 100%.

[23] A molded product which is obtained by molding the prepreg according to any one of [1] to [22].

[24] A method of producing a prepreg comprising: heating a laminate obtained by laminating a film containing an amorphous thermoplastic resin on a carbon fiber substrate to impregnate the carbon fiber substrate with the amorphous thermoplastic resin, wherein the film satisfies Condition (1a) including

(v) a tensile elongation at break (T1) of the film in a direction perpendicular to a longitudinal direction is measured according to JIS K 7127,
(vi) separately, the film is immersed for 1,000 hours in an oil containing 55 to 65 mass% of tributyl phosphate at 23°C, and then a tensile elongation at break (T2) of the film in the direction perpendicular to the longitudinal direction is measured according to JIS K 7127, and
(vii) a tensile elongation retention rate obtained by Expression (1) is 70% or greater.

$$\text{Tensile Elongation Retention Rate} = (\text{Tensile Elongation at Break (T2)}/\text{Tensile Elongation at Break (T1)}) \times 100 \quad \ldots (1)$$

[25] The method of producing a prepreg according to [24], wherein the carbon fiber substrate is a sheet-shaped carbon fiber bundle in which carbon fibers are aligned in uni-direction.

[26] The method of producing a prepreg according to [24] or [25], wherein the amorphous thermoplastic resin contains a polyetherimide resin.

[27] The method of producing a prepreg according to [26], wherein the polyetherimide resin includes a polyetherimide resin (A) having a repeating unit represented by General Formula (a).

In Formula (a), m is a number of 5 to 1,500.

[28] The method of producing a prepreg according to [27], wherein a content of the polyetherimide resin (A) is 85 mass% or greater with respect to a total mass of the amorphous thermoplastic resin.

[29] The method of producing a prepreg according to any one of [24] to [28], wherein in the amorphous thermoplastic resin, two or more kinds of the polyetherimide resins (A) having different melt volume rates at a set temperature of 360°C and a load of 5 kg as measured according to ISO 1133 are blended.

[30] A method of producing the prepreg according to any one of [1] to [22].

[31] A prepreg comprising: a matrix resin; and carbon fibers,
wherein the matrix resin is a blended material of two or more kinds of polyetherimide resins (A) having different melt volume rates at a set temperature of 360°C and a load of 5 kg as measured according to ISO 1133, and having a repeating unit represented by General Formula (a).

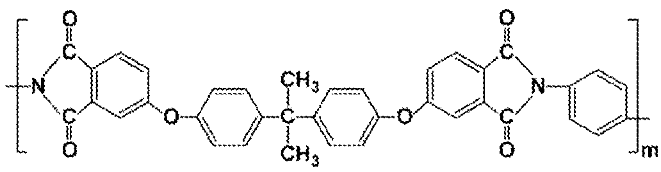 · · · (a)

In Formula (a), m is a number of 5 to 1,500.

[32] The prepreg according to [31], wherein the matrix resin is a blended material of a polyetherimide resin (A-1) having a melt volume rate of 10 $cm^3$/10 minutes or less at a set temperature of 360°C and a load of 5 kg as measured according to ISO 1133, and having a repeating unit represented by General Formula (a), and a polyetherimide resin (A-2) having a melt volume rate of 15 $cm^3$/10 minutes or greater at a set temperature of 360°C and a load of 5 kg

as measured according to ISO 1133, and having a repeating unit represented by General Formula (a).

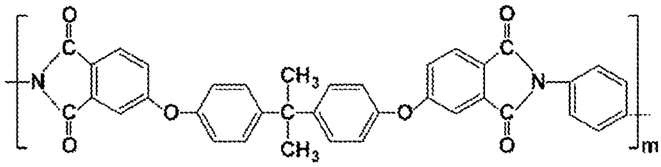

・・・(a)

In Formula (a), m is a number of 5 to 1,500.

[33] The prepreg according to [31] or [32], wherein a sheet-shaped carbon fiber bundle in which the carbon fibers are aligned in uni-direction is impregnated with the matrix resin.

[34] The prepreg according to any one of [31] to [33], wherein in Formula (a), m is preferably a number of 10 to 1,000, more preferably 50 to 800, and even more preferably 100 to 600.

[35] The prepreg according to any one of [31] to [34], wherein a tensile elongation retention rate of the matrix resin measured by a method described in Examples is 15% or greater and 90% or less, preferably 20% or greater and 90% or less, more preferably 30% or greater and 90% or less, even more preferably 50% or greater and 90% or less, and still more preferably 70% or greater and 90% or less.

[36] The prepreg according to any one of [31] to [35], wherein a weight content of the matrix resin in the prepreg is preferably 25 to 80 wt%, more preferably 30 to 70 wt%, and even more preferably 35 to 55 wt% with respect to a total weight of the prepreg.

[37] The prepreg according to any one of [31] to [36], wherein a volume content (Vf) of the carbon fibers in the prepreg is preferably 20 to 75 vol%, more preferably 30 to 70 vol%, and even more preferably 45 to 65 vol% with respect to a total volume of the prepreg.

[38] The prepreg according to any one of [32] to [37], wherein a content of the polyetherimide resin (A-1) is preferably 30 mass% or greater and 100 mass% or less, more preferably 50 mass% or greater and 95 mass% or less, and even more preferably 70 mass% or greater and 95 mass% or less with respect to a total mass of the matrix resin.

[39] The prepreg according to any one of [32] to [38], wherein a content of the polyetherimide resin (A-2) is preferably 0 mass% or greater and 70 mass% or less, more preferably 5 mass% or greater and 50 mass% or less, and even more preferably 5 mass% or greater and 30 mass% or less with respect to a total mass of the matrix resin.

[40] The prepreg according to any one of [32] to [39], wherein a glass transition temperature (Tg) of the polyetherimide resin (A-1) is preferably 50°C to 500°C, more preferably 100°C to 300°C, and even more preferably 150°C to 250°C.

[41] The prepreg according to any one of [32] to [40], wherein a glass transition temperature (Tg) of the polyetherimide resin (A-2) is preferably 50°C to 500°C, more preferably 100°C to 300°C, and even more preferably 150°C to 250°C.

[42] The prepreg according to any one of [32] to [41], wherein a difference in melt volume rate represented by [melt volume rate of the polyetherimide resin (A-2)] - [melt volume rate of the polyetherimide resin (A-1)] is preferably 5 to 27, more preferably 7 to 20, and even more preferably 10 to 15.

[43] The prepreg according to any one of [32] to [42], wherein a difference in glass transition temperature represented by [glass transition temperature of the polyetherimide resin (A-2)] - [glass transition temperature of the polyetherimide resin (A-1)] is preferably 0°C to 20°C, more preferably 0°C to 10°C, and even more preferably 0°C to 5°C.

[44] The prepreg according to any one of [31] to [43], wherein the matrix resin may contain a polyetherimide resin (B) other than the polyetherimide resin (A), and a content of the polyetherimide resin (B) is preferably 0 mass% of greater and 5 mass% or less, more preferably 0 mass% or greater and 1 mass% or less, even more preferably 0 mass% or greater and 0.5 mass% or less, and particularly preferably substantially absent (that is, 0 mass%) with respect to a total mass of the matrix resin.

[45] The prepreg according to any one of [32] to [44], wherein a proportion of the repeating unit represented by General Formula (a) in 100 mass% of the polyetherimide resin (A-1) is preferably 50 to 100 mass%, more preferably 70 to 100 mass%, even more preferably 95 to 100 mass%, and particularly preferably 100 mass%.

[46] The prepreg according to any one of [31] to [45], wherein a 90°-bending strength measured by a method described in Examples is preferably 80 to 150 MPa, more preferably 90 to 130 MPa, and even more preferably 100 to 120 MPa.

[47] The prepreg according to any one of [31] to [48], wherein an in-plane shear strength retention rate measured by a method described in Examples is preferably 70% to 100%, more preferably 80% to 100%, and even more preferably 90% to 100%.

[48] The prepreg according to any one of [31] to [47], wherein a content of the polyetherimide resin (A) is 85 mass% or greater with respect to a total mass of the matrix resin.

[49] A molded product which is obtained by molding the prepreg according to any one of [31] to [48].

[50] A method of producing the prepreg according to any one of [31] to [48].

[51] A resin composition, wherein two or more kinds of polyetherimide resins (A) having different melt volume rates at a set temperature of 360°C and a load of 5 kg as measured according to ISO 1133, and having a repeating unit represented by General Formula (a) are blended.

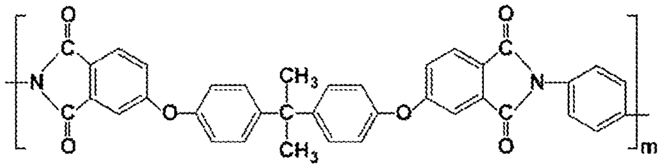

· · · (a)

In Formula (a), m is a number of 5 to 1,500.

[52] The resin composition according to [51], wherein in the polyetherimide resin (A), a polyetherimide resin (A-1) having a melt volume rate of 3 to 10 $cm^3$/10 minutes at a set temperature of 360°C and a load of 5 kg as measured according to ISO 1133 is blended.

[53] The resin composition according to [[52], wherein an amount of the polyetherimide resin (A-1) blended is 85 mass% or greater with respect to a total mass of the resin composition.

[54] The resin composition according to any one of [51] to [53], wherein the resin composition preferably contains a polyetherimide resin (A-1) having a melt volume rate of 10 $cm^3$/10 minutes or less at a set temperature of 360°C and a load of 5 kg as measured according to ISO 1133, and having a repeating unit represented by General Formula (a), and a polyetherimide resin (A-2) having a melt volume rate of 15 $cm^3$/10 minutes or greater at a set temperature of 360°C and a load of 5 kg as measured according to ISO 1133, and having a repeating unit represented by General Formula (a); preferably substantially consists of the polyetherimide resin (A-1) and the polyetherimide resin (A-2); and preferably consists of the polyetherimide resin (A-1) and the polyetherimide resin (A-2).

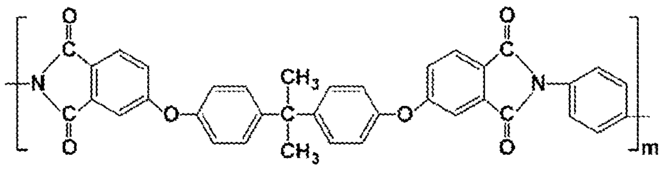

· · · (a)

In Formula (a), m is a number of 5 to 1,500.

[55] A film comprising: the resin composition according to any one of [51] to [54].

[56] Use of the resin composition according to any one of [51] to [54] as a matrix resin in the production of a prepreg.

[57] Use of the film according to [55] in the production of a prepreg.

In addition, the present invention has the following aspects.

[1] A fiber-reinforced thermoplastic resin prepreg comprising: a matrix resin containing a polyetherimide resin (A) having a repeating unit represented by General Formula (a); and carbon fibers,
wherein the matrix resin satisfies Condition (1) including

(i) a film is produced by extrusion-molding the matrix resin into a film shape,
(ii) a tensile elongation at break (T1) of the film in a direction perpendicular to a longitudinal direction is measured according to JIS K 7127,
(iii) separately, the film produced in (i) is immersed for 1,000 hours in an oil containing 55 to 65 mass% of tributyl phosphate at 23°C, and then a tensile elongation at break (T2) of the film in the direction perpendicular to the longitudinal direction is measured according to JIS K 7127, and
(iv) a tensile elongation retention rate obtained by Expression (1) is 70% or greater.

$$\text{Tensile Elongation Retention Rate} = (\text{Tensile Elongation at Break (T2)}/\text{Tensile Elongation at Break (T1)}) \times 100 \ldots (1)$$

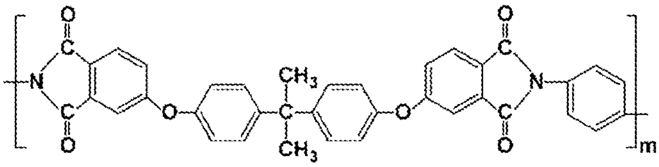

· · · (a)

In Formula (a), m is a number of 5 to 1,500.

[2] The fiber-reinforced thermoplastic resin prepreg according to [1], wherein the polyetherimide resin (A) includes a polyetherimide resin (A-1) having a melt volume rate of 3 to 10 $cm^3$/10 minutes as measured according to ISO 1133.
[3] The fiber-reinforced thermoplastic resin prepreg according to [2], wherein a content of the polyetherimide resin (A-1) is 85 mass% or greater with respect to a total mass of the matrix resin.
[4] The fiber-reinforced thermoplastic resin prepreg according to [2] or [3], wherein a content of the polyetherimide resin (A-1) is 95 mass% or less with respect to a total mass of the matrix resin.
[5] The fiber-reinforced thermoplastic resin prepreg according to any one of [1] to [4], wherein the polyetherimide resin (A) includes a polyetherimide resin (A-2) having a melt volume rate of 15 to 30 $cm^3$/10 minutes as measured according to ISO 1133.
[6] The fiber-reinforced thermoplastic resin prepreg according to [5], wherein a content of the polyetherimide resin (A-2) is 5 mass% or greater with respect to a total mass of the matrix resin.
[7] The fiber-reinforced thermoplastic resin prepreg according to [5] or [6], wherein a content of the polyetherimide resin (A-2) is 15 mass% or less with respect to a total mass of the matrix resin.
[8] The fiber-reinforced thermoplastic resin prepreg according to any one of [1] to [7], wherein the carbon fibers are continuous fibers.
[9] A molded product which is obtained by molding the fiber-reinforced thermoplastic resin prepreg according to any one of [1] to [8].
[10] A fiber-reinforced thermoplastic resin prepreg comprising: a matrix resin containing an amorphous thermoplastic resin; and carbon fibers,
wherein the matrix resin satisfies Condition (1) including

(i) a film is produced by extrusion-molding the matrix resin into a film shape,
(ii) a tensile elongation at break (T1) of the film in a direction perpendicular to a longitudinal direction is measured according to JIS K 7127,
(iii) separately, the film produced in (i) is immersed for 1,000 hours in an oil containing 55 to 65 mass% of tributyl phosphate at 23°C, and then a tensile elongation at break (T2) of the film in the direction perpendicular to the longitudinal direction is measured according to JIS K 7127, and
(iv) a tensile elongation retention rate obtained by Expression (1) is 70% or greater.

$$\text{Tensile Elongation Retention Rate} = (\text{Tensile Elongation at Break (T2)}/\text{Tensile Elongation at Break (T1)}) \times 100 \ldots (1)$$

[11] A method of producing a fiber-reinforced thermoplastic resin prepreg comprising: heating a laminate obtained by laminating, on a carbon fiber substrate, a film containing an amorphous thermoplastic resin and satisfying Condition (1a), to impregnate the carbon fiber substrate with the amorphous thermoplastic resin,
wherein Condition (1a) includes

(v) a tensile elongation at break (T1) of the film in a direction perpendicular to a longitudinal direction is measured according to JIS K 7127,
(vi) separately, the film is immersed for 1,000 hours in an oil containing 55 to 65 mass% of tributyl phosphate at 23°C, and then a tensile elongation at break (T2) of the film in the direction perpendicular to the longitudinal direction is measured according to JIS K 7127, and
(vii) a tensile elongation retention rate obtained by Expression (1) is 70% or greater.

$$\text{Tensile Elongation Retention Rate} = (\text{Tensile Elongation at Break (T2)}/\text{Tensile Elongation at Break (T1)}) \times 100 \ldots (1)$$

[12] A fiber-reinforced thermoplastic resin prepreg comprising: a matrix resin; and carbon fibers,

wherein the matrix resin contains a polyetherimide resin (A) having a repeating unit represented by General Formula (a), and
a content of the polyetherimide resin (A) is 45 to 100 mass% with respect to a total mass of the matrix resin.

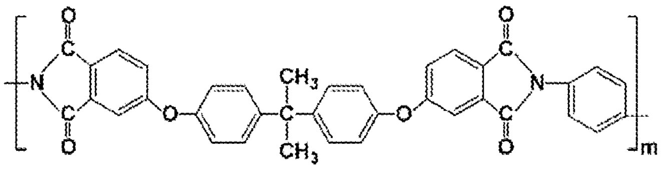

... (a)

In Formula (a), m is a number of 5 to 1,500.

[Advantageous Effects of Invention]

According to the present invention, it is possible to provide a fiber-reinforced thermoplastic resin prepreg from which a molded product having excellent chemical resistance and mechanical characteristics is obtained even with the use of an amorphous thermoplastic resin as a matrix resin and a production method therefor, and a molded product.

[Brief Description of Drawings]

FIG. 1 is a schematic diagram schematically showing an example of a producing apparatus for a fiber-reinforced thermoplastic resin prepreg.

[Detailed Description of Invention]

Fiber-Reinforced Thermoplastic Resin Prepreg

Hereinafter, an embodiment of a fiber-reinforced thermoplastic resin prepreg (hereinafter, also simply referred to as "prepreg") according to the present invention will be described.
The prepreg according to the present embodiment contains a matrix resin and carbon fibers.
The prepreg may further contain a component (optional component) other than the matrix resin and the carbon fibers.

Matrix Resin

The matrix resin (hereinafter, also simply referred to as "resin composition") according to the present embodiment contains a polyetherimide resin (A) having a repeating unit represented by General Formula (a) (hereinafter, also referred to as "repeating unit (a)"). In a case where the matrix resin contains the polyetherimide resin (A), the bending strength of a molded product obtained by molding the prepreg according to the present embodiment increases, and the mechanical characteristics of the molded product are improved.

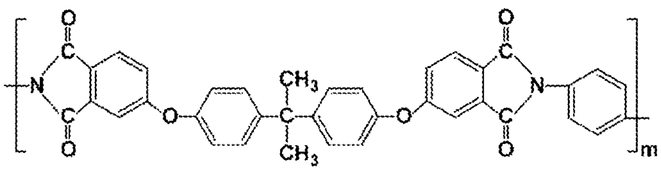

... (a)

In Formula (a), m is a number of 5 to 1,500.
The proportion of the repeating unit (a) in 100 mass% of the polyetherimide resin (A) is preferably 50 to 100

mass%, more preferably 70 to 100 mass%, and even more preferably 95 to 100 mass%.

The polyetherimide resin (A) preferably includes a polyetherimide resin (A-1) having a melt volume rate (MVR) of 3 to 10 $cm^3$/10 minutes as measured according to ISO 1133. In a case where the polyetherimide resin (A) includes the polyetherimide resin (A-1), the chemical resistance of the molded product increases.

The set temperature at a time when the MVR of the polyetherimide resin (A) is measured is 360°C, and the load is 5 kg.

A commercially available product can be used as the polyetherimide resin (A-1), and examples thereof include the trade name "Ultem (registered trademark. The same shall apply hereinafter.) CRS5001" manufactured by SABIC Innovative Plastics.

The polyetherimide resin (A-1) may be used singly, or two or more kinds thereof may be used in combination.

The content of the polyetherimide resin (A-1) is preferably 85 mass% or greater, and more preferably 90 mass% or greater with respect to the total mass of the matrix resin. In addition, the content of the polyetherimide resin (A-1) is preferably 95 mass% or less with respect to the total mass of the matrix resin. In a case where the content of the polyetherimide resin (A-1) is equal to or greater than the above-described lower limit value, the chemical resistance of the molded product is further improved. In a case where the content of the polyetherimide resin (A-1) is equal to or less than the above-described upper limit value, it is possible to favorably maintain the impregnation properties of the matrix resin into the carbon fibers.

The polyetherimide resin (A) preferably further includes a polyetherimide resin (A-2) having a MVR of 15 to 30 $cm^3$/10 minutes at a set temperature of 360°C and a load of 5 kg as measured according to ISO 1133. The polyetherimide resin (A-2) has more excellent fluidity than the polyetherimide resin (A-1). Therefore, in a case where the polyetherimide resin (A) includes the polyetherimide resin (A-2), the impregnation properties of the matrix resin into the carbon fibers increase. As a result, the bending strength of the molded product further increases, and the mechanical characteristics of the molded product are further improved.

A commercially available product can be used as the polyetherimide resin (A-2), and examples thereof include the trade name "Ultem CRS5011" manufactured by SABIC Innovative Plastics.

The polyetherimide resin (A-2) may be used singly, or two or more kinds thereof may be used in combination.

The content of the polyetherimide resin (A-2) is preferably 5 mass% or greater with respect to the total mass of the matrix resin. In addition, the content of the polyetherimide resin (A-2) is preferably 15 mass% or less, and more preferably 10 mass% or less with respect to the total mass of the matrix resin. In a case where the content of the polyetherimide resin (A-2) is equal to or greater than the above-described lower limit value, the impregnation properties of the matrix resin into the carbon fibers further increase. In a case where the content of the polyetherimide resin (A-2) is equal to or less than the above-described upper limit value, it is possible to favorably maintain the chemical resistance and bending strength of the molded product.

The polyetherimide resin (A) preferably includes the polyetherimide resin (A-1) and the polyetherimide resin (A-2) from the viewpoint of an excellent balance between the chemical resistance and the impregnation properties.

In addition, as long as the effects of the present invention are not impaired, the polyetherimide resin (A) may further include a polyetherimide resin (A-3) other than the polyetherimide resin (A-1) and the polyetherimide resin (A-2).

From the viewpoint that it is possible to favorably maintain the chemical resistance of the molded product, the content of the polyetherimide resin (A-3) is preferably 5 mass% or less, more preferably 1 mass% or less, even more preferably 0.5 mass% or less, and particularly preferably substantially absent with respect to the total mass of the matrix resin.

In the present specification, the expression "substantially absent" means that the material is not actively blended, except for the case of being inevitably incorporated.

From the viewpoint that it is possible to favorably maintain the chemical resistance of the molded product, the content of the polyetherimide resin (A) is preferably 95 mass% or greater, more preferably 98 mass% or greater, even more preferably 99 mass% or greater, and particularly preferably 100 mass% with respect to the total mass of the matrix resin. The glass transition temperature (Tg) of the polyetherimide resin (A) is preferably 50°C to 500°C, more preferably 100°C to 300°C, and even more preferably 150°C to 250°C from the viewpoint of fluidity during molding and impregnation. The glass transition temperature (Tg) is defined as an inflection point of the storage elastic modulus measured by dynamic mechanical analysis (DMA).

The matrix resin may further contain a polyetherimide resin (B) other than the polyetherimide resin (A) as long as the effects of the present invention are not impaired.

Examples of the polyetherimide resin (B) include those having a repeating unit represented by General Formula (b) (hereinafter, also referred to as "repeating unit (b)").

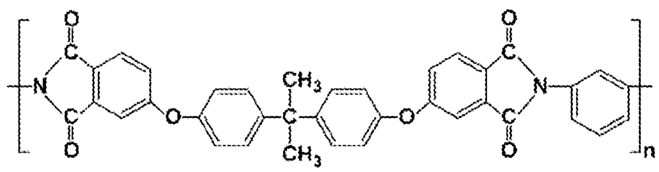

· · · (b)

In Formula (b), n is a number of 5 to 1,500.

The proportion of the repeating unit (b) in 100 mass% of the polyetherimide resin (B) is preferably 10 to 100 mass%, more preferably 30 to 100 mass%, and even more preferably 50 to 100 mass%.

A commercially available product can be used as the polyetherimide resin (B), and examples thereof include the trade name "Ultem 1000" and Ultem 1010" manufactured by SABIC Innovative Plastics.

The polyetherimide resin (B) may be used singly, or two or more kinds thereof may be used in combination.

From the viewpoint that it is possible to favorably maintain the chemical resistance of the molded product, the content of the polyetherimide resin (B) is preferably 5 mass% or less, more preferably 1 mass% or less, even more preferably 0.5 mass% or less, and particularly preferably substantially absent with respect to the total mass of the matrix resin.

The matrix resin may further contain a resin (hereinafter, also referred to as "other resins") other than the polyetherimide resin as long as the effects of the present invention are not impaired.

Examples of other resins include polyamide (nylon 6, nylon 66, and the like) resins, polyolefin (polyethylene, polypropylene, and the like) resins, modified polyolefin resins, polyester (polyethylene terephthalate, polybutylene terephthalate, and the like) resins, polycarbonate resins, polyamide-imide resins, polyphenylene oxide resins, polysulfone resins, polyether sulfone resins, polyether ether ketone resins, polystyrene resins, ABS resins, polyphenylene sulfide resins, liquid crystal polyester resins, and copolymers of acrylonitrile and styrene.

Other resins may be used singly, or in combination of two or more kinds thereof.

From the viewpoint that it is possible to favorably maintain the chemical resistance of the molded product, the content of other resins is preferably 1 mass% or less, more preferably 0.5 mass% or less, even more preferably 0.1 mass% or less, and particularly preferably substantially absent with respect to the total mass of the matrix resin.

The matrix resin satisfies the following Condition (1). The higher the tensile elongation retention rate under the following Condition (1), the greater the chemical resistance of the matrix resin. In a case where the tensile elongation retention rate is 15% or greater, the chemical resistance of the matrix resin is particularly excellent. A molded product having excellent chemical resistance can be obtained from a prepreg containing a matrix resin having excellent chemical resistance.

Condition (1)

(i) A film is produced by extrusion-molding the matrix resin into a film shape.
(ii) A tensile elongation at break (T1) of the film in a direction (TD direction) perpendicular to a longitudinal direction (MD direction) is measured according to JIS K 7127.
(iii) Separately, the film produced in (i) is immersed for 1,000 hours in an oil containing 55 to 65 mass% of tributyl phosphate at 23°C, and then a tensile elongation at break (T2) of the film in the direction (TD direction) perpendicular to the longitudinal direction (MD direction) is measured according to JIS K 7127.
(iv) A tensile elongation retention rate obtained by Expression (1) is 15% or greater and 90% or less.

$$\text{Tensile Elongation Retention Rate} = (\text{Tensile Elongation at Break (T2)}/\text{Tensile Elongation at Break (T1)}) \times 100 \ldots (1)$$

From the viewpoint of further increasing the chemical resistance of the molded product, the tensile elongation retention rate under Condition (1) is preferably 80% or greater, more preferably 85% or greater, even more preferably 90% or greater, particularly preferably 95% or greater, and most preferably 100%. In particular, from the viewpoint of the strength retention rate of the molded product in the chemical resistance of the molded product, the tensile elongation retention rate under Condition (1) is preferably 15% or greater, and more preferably 20% or greater. The tensile elongation retention rate under Condition (1) is preferably 90% or less, and more preferably 85% or less. When the tensile elongation retention rate under Condition (1) is 15% or greater, the penetration of the solvent into the molecular chains of the matrix

resin is suppressed. Therefore, the swelling of the matrix resin due to the solvent or the like is small even in the production of a molded product, and thus the strength is less likely to change. When the tensile elongation retention rate under Condition (1) is 90% or less, the matrix resin is in a state of having a free volume at a molecular level at which the solvent or the like can be taken in between the resin chains, and the flow or impregnation of the matrix resin during molding proceeds smoothly. Thus, voids or the like are less likely to occur in the molded product. As a result, a high strength retention rate can be achieved in a chemical resistance test for the molded product.

The tensile elongation retention rate under Condition (1) can be controlled by the formulation of the matrix resin. For example, as the content of the polyetherimide resin (A-1) in the matrix resin increases, there is a tendency for the tensile elongation retention rate to rise.

The weight content of the matrix resin in the prepreg is preferably 15 to 70 wt%, more preferably 20 to 60 wt%, and even more preferably 25 to 45 wt%. In a case where the weight content of the matrix resin is equal to or greater than the above-described lower limit value, it is possible to sufficiently secure the adhesion between the carbon fibers and the matrix resin. In a case where the weight content of the matrix resin is equal to or less than the above-described upper limit value, the reinforcing effect of the carbon fibers is sufficiently exhibited, and the bending strength of the molded product further increases.

In the present specification, the weight content is a value obtained by the measuring method according to ASTM D3171 or JIS K7075.

The matrix resin may be a blended material of two or more kinds of polyetherimide resins (A) having different melt volume rates at a set temperature of 360°C and a load of 5 kg as measured according to ISO 1133, and having a repeating unit represented by General Formula (a). When two or more different kinds of polyetherimide resins (A) are included, a difference in melt volume rate therebetween represented by [melt volume rate of first polyetherimide resin] - [melt volume rate of second polyetherimide resin], where the "first polyetherimide resin" is one polyetherimide resin and the "second polyetherimide resin" is the other polyetherimide resin having a lower melt volume rate than the first polyetherimide resin, is preferably 5 to 27, more preferably 7 to 20, and even more preferably 10 to 15 from the viewpoint of film formability and impregnation properties.

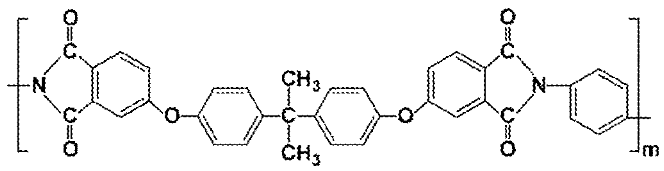

· · · (a)

In Formula (a), m is a number of 5 to 1,500.

Examples of the two or more kinds of polyetherimide resins included in the polyetherimide resin (A) include those similar to the polyetherimide resin (A-1) and the polyetherimide resin (A-2) described above.

Carbon Fibers

The carbon fibers are not particularly limited, and examples thereof include polyacrylonitrile (PAN)-based carbon fibers, petroleum or coal pitch-based carbon fibers, rayon-based carbon fibers, and lignin-based carbon fibers. Among these, PAN-based carbon fibers are preferable.

The carbon fibers are preferably continuous fibers.

Examples of the continuous fibers include a sheet form in which carbon fibers are aligned in uni-direction, and a fabric form (for example, plain weave, twill weave, satin weave).

Typically, the carbon fibers are used in the form of carbon fiber bundles in which a plurality of carbon fibers are bundled.

The filament number of a carbon fiber bundle is preferably 1,000 to 60,000, more preferably 1,000 to 50,000, and even more preferably 12,000 to 48,000. In a case where the filament number of a carbon fiber bundle is in the above range, the productivity and mechanical characteristics on an industrial scale are excellent.

The volume content of the carbon fibers in the prepreg (Vf) is preferably 20 to 75 vol%, more preferably 30 to 70 vol%, and even more preferably 45 to 65 vol%. In a case where the volume content (Vf) of the carbon fibers is equal to or greater than the above-described lower limit value, the bending strength of the molded product further increases. In a case where the volume content (Vf) of the carbon fibers is equal to or less than the above-described upper limit value, it is possible to sufficiently secure the adhesion between the carbon fibers and the matrix resin. The volume content is a value obtained by the calculation method according to ASTM D3171 or JIS K7075.

Optional Components

The prepreg may contain fibers (hereinafter, also referred to as "other fibers") other than the carbon fibers. In the present specification, carbon fibers and other fibers are collectively also referred to as "reinforcing fibers".
As other fibers, inorganic fibers other than the carbon fibers, organic fibers, metal fibers, or reinforcing fibers with a hybrid configuration obtained by combining the above fibers can be used.
Examples of the inorganic fibers other than the carbon fibers include graphite fibers, silicon carbide fibers, alumina fibers, tungsten carbide fibers, boron fibers, and glass fibers.
Examples of the organic fibers include aramid fibers, high-density polyethylene fibers, other general nylon fibers, and polyester fibers.
Examples of the metal fibers include stainless steel fibers and iron fibers.
Examples of the reinforcing fibers with a hybrid configuration include metal-coated carbon fibers.
Among these, glass fibers are preferable as other fibers in consideration of mechanical properties such as the strength of the prepreg.
Other fibers may be used singly, or in combination of two or more kinds thereof.
Other fibers are preferably continuous fibers.
The prepreg may further contain an additive other than the reinforcing fibers.
Examples of the additive include a flame retardant, a weather-resistant improver, an antioxidant, a heat stabilizer, an ultraviolet absorber, a plasticizer, a lubricant, a colorant, a compatibilizing agent, and a conductive filler.
The additive may be used singly, or two or more kinds thereof may be used in combination.
The volume content of the additive in the prepreg is preferably 5 vol% or less, more preferably 1 vol% or less, and even more preferably 0.5 vol% or less from the viewpoint of maintaining the mechanical strength.
The total volume content of the matrix resin, the carbon fibers, other fibers, and the additive in the prepreg is 100 vol%.

Method of Producing Prepreg

A method of producing the prepreg is not particularly limited, and the prepreg can be produced by a known method. For example, the prepreg can be produced by impregnating a carbon fiber substrate with the matrix resin.
Examples of the method for impregnation with the matrix resin include a method in which the matrix resin is processed into a film having a thickness of about 10 to 100 μm, fibers having a fiber diameter of about 5 to 50 μm, or a powder having an average particle diameter of about 10 to 100 μm and adhered to a carbon fiber substrate.
The "carbon fiber substrate" is an aggregate of carbon fibers.
When the prepreg contains an additive, the matrix resin and the additive may be mixed to prepare a matrix resin composition, and the carbon fiber substrate may be impregnated with the matrix resin composition.
When the prepreg contains other fibers, a reinforcing fiber substrate including the carbon fibers and other fibers may be impregnated with the matrix resin or the matrix resin composition.
The "reinforcing fiber substrate" is an aggregate of carbon fibers and other fibers.
Hereinafter, one embodiment of the method of producing the prepreg will be described.
In the method of producing the prepreg according to the present embodiment, a laminate obtained by laminating a film containing a matrix resin and satisfying Condition (1a) on a carbon fiber substrate is heated to impregnate the carbon fiber substrate with the matrix resin, whereby a prepreg is produced. Specifically, using a producing apparatus 10 shown in FIG. 1, a carbon fiber substrate 11 is unwound from a roll 18. Separately, the carbon fiber substrate 11 passes between films 12 unwound from a plurality of rolls 18 and satisfying Condition (1a) and pressing rollers 19, and the film 12 is thus laminated on upper and lower surfaces of the carbon fiber substrate 11 to form a laminate. The laminate is preheated by a heater 13, and then a release film 14 is disposed on upper and lower surfaces of the laminate. Next, by pressurization with a hot plate press 15 heated to a temperature equal to or higher than the melting point or the flow temperature of the matrix resin and pressurization with a cooling press 16 cooled to a temperature equal to or lower than the solidification temperature, the carbon fiber substrate 11 is impregnated with the matrix resin in the laminate. After that, the release film 14 is removed to obtain a prepreg 17. The heating temperature of the laminate is not particularly limited as long as it is a temperature at which the matrix resin is heated and melted. As a range of the tensile elongation retention rate of the film in Condition (1a), the above-described embodiment can be applied. For example, in a case where the tensile elongation retention rate of the film is 70% or greater and 100% or less, the film has high chemical resistance, and thus a molded product finally obtained by molding the prepreg has excellent chemical-resistant performance. In addition, in the step of producing the prepreg by stacking the film on the carbon fiber substrate, the film is less likely to be affected by chemicals, and thus the quality of the prepreg is stable. In a case where the tensile elongation retention rate of the film is 15% or greater and 90% or less, it is possible to improve the strength retention rate of a molded product obtained by molding the prepreg obtained by the method of producing the prepreg according to the

present embodiment as described above.

The film to be laminated on the carbon fiber substrate is obtained by extrusion-molding the matrix resin or the matrix resin composition described above into a film shape.

Condition (1a)

(v) A tensile elongation at break (T1) of the film in a direction perpendicular to a longitudinal direction is measured according to JIS K 7127.
(vi) Separately, the film is immersed for 1,000 hours in an oil containing 55 to 65 mass% of tributyl phosphate at 23°C, and then a tensile elongation at break (T2) of the film in the direction perpendicular to the longitudinal direction is measured according to JIS K 7127.
(vii) A tensile elongation retention rate obtained by Expression (1) is 70% or greater.

$$\text{Tensile Elongation Retention Rate} = (\text{Tensile Elongation at Break (T2)}/\text{Tensile Elongation at Break (T1)}) \times 100 \quad ...\ (1)$$

Examples of the form of the prepreg include a unidirectional prepreg (UD prepreg) in which a sheet-shaped carbon fiber bundle with carbon fibers aligned in uni-direction is impregnated with a matrix resin, a cloth prepreg in which carbon fiber fabric is impregnated with a matrix resin, and a towpreg in which a tow (carbon fiber bundle) is pre-impregnated with a matrix resin.

The thickness of the prepreg is preferably 0.04 to 0.7 mm, and more preferably 0.04 to 0.4 mm.

Effects

The above-described polyetherimide resin (A) is an amorphous thermoplastic resin, but the matrix resin having the repeating unit (a) and containing the polyetherimide resin (A) satisfies Condition (1). Therefore, with the prepreg according to the present embodiment, it is possible to obtain a molded product having excellent chemical resistance and mechanical characteristics even with the use of an amorphous thermoplastic resin as a matrix resin.

In particular, in a case where the polyetherimide resin (A) includes the polyetherimide resin (A-1), the chemical resistance is further improved. In addition, in a case where the polyetherimide resin (A) includes the polyetherimide resin (A-2) in addition to the polyetherimide resin (A-1), the balance between the chemical resistance and the impregnation properties is excellent.

The prepreg is not limited to those according to the embodiments described above, and may include, for example, a matrix resin containing an amorphous thermoplastic resin and satisfying Condition (1), carbon fibers, and an optional component as necessary.

Examples of the amorphous thermoplastic resin include the above-described polyetherimide resin, a polyvinyl chloride resin, a polystyrene resin, a polymethyl methacrylate resin, a polycarbonate resin, a polyether sulfone resin, and a polyamide-imide resin. These amorphous thermoplastic resins may be used singly, or in combination of two or more kinds thereof. From the viewpoint of moldability, the content of the amorphous thermoplastic resin is preferably 60 mass% or greater, more preferably 80 mass% or greater, and even more preferably 90 mass% or greater with respect to the total mass of the matrix resin (resin composition). The content of the amorphous thermoplastic resin can be 100 mass% or less or 98 mass% or less with respect to the total mass of the matrix resin (resin composition).

The carbon fibers and the optional component are each the same as those exemplified above.

The prepreg according to the present embodiment can be produced by, for example, impregnating a carbon fiber substrate with a matrix resin containing an amorphous thermoplastic resin.

The method for impregnation with the matrix resin is the same as the method exemplified above.

The carbon fiber substrate may be impregnated with a matrix resin composition containing a matrix resin and an additive instead of the matrix resin.

When the prepreg according to the present embodiment contains other fibers, a reinforcing fiber substrate including carbon fibers and other fibers may be impregnated with a matrix resin or a matrix resin composition.

In addition, for example, a laminate obtained by laminating a film containing an amorphous thermoplastic resin and satisfying Condition (1a) on a carbon fiber substrate may be heated to impregnate the carbon fiber substrate with the amorphous thermoplastic resin, and a prepreg may thus be produced. The heating temperature of the laminate is not particularly limited as long as it is a temperature at which the amorphous thermoplastic resin is heated and melted.

The film to be laminated on the carbon fiber substrate is obtained by extrusion-molding an amorphous thermoplastic resin, or a matrix resin or a matrix resin composition containing an amorphous thermoplastic resin into a film shape.
In addition, the prepreg is not limited to those according to the embodiments described above, and may include, for example, a matrix resin containing a polyetherimide resin (A) having a repeating unit represented by General Formula (a), carbon fibers, and an optional component as necessary.
In the matrix resin according to the present embodiment, the content of the polyetherimide resin (A) is 45 to 100 mass%, preferably 60 to 100 mass%, more preferably 70 to 100 mass%, even more preferably 80 to 100 mass%, particularly preferably 90 to 100 mass%, and most preferably 95 to 100 mass% with respect to the total mass of the matrix resin.
As long as the effects of the present invention are not impaired, the matrix resin may contain a resin (for example, the above-described polyetherimide resin (B) and other resins) other than the polyetherimide resin (A).
The carbon fibers and the optional component are each the same as those exemplified above.
The prepreg according to the present embodiment can be produced by, for example, impregnating a carbon fiber substrate with a matrix resin containing a polyetherimide resin (A).
The method for impregnation with the matrix resin is the same as the method exemplified above.
The carbon fiber substrate may be impregnated with a matrix resin composition containing a matrix resin and an additive instead of the matrix resin.
When the prepreg according to the present embodiment contains other fibers, a reinforcing fiber substrate including carbon fibers and other fibers may be impregnated with a matrix resin or a matrix resin composition.

Molded Product

A molded product is obtained by molding the above-described prepreg, and is formed by laminating and integrating the prepregs.
The molded product is preferably obtained by molding a laminate which is obtained by laminating two or more prepregs according to the above-described aspect only. The molded product may be obtained by molding a laminate which is obtained by laminating a combination of the prepreg according to the above-described aspect and a prepreg other than the prepreg according to the above-described aspect.
The lamination configuration of the prepregs in the laminate is not particularly limited.
The number of prepregs laminated in the laminate can be appropriately set according to the thickness of the prepreg and the thickness required for the molded product.
When the prepreg is a UD prepreg, the fiber direction of carbon fibers of each UD prepreg to be laminated can be appropriately set according to the physical properties required for the molded product. The fiber directions of carbon fibers of the UD prepregs may be the same direction. Further, for example, when the physical properties of the molded product are required to be isotropic, the UD prepregs are preferably laminated so that the fiber directions of carbon fibers of the UD prepregs to be laminated, viewed in plan, are a combination of 0° and 90°, a combination of 0°, 45°, 90°, and -45°, or a combination of 0°, 60°, and -60° and are symmetrical about the thickness direction. Method of Producing Molded Product
The molded product is obtained by molding the prepreg.
The method of molding the prepreg is not particularly limited, and examples thereof include a method including molding one prepreg of a laminate of a plurality of prepregs by a mold pressing method, an autoclave method, or a hot or cold pressing method.
Examples of the method of laminating the prepreg include an automatic lamination method utilizing a robot.
Since the molded product described above is obtained by molding the above-described prepreg, the molded product has excellent chemical resistance and mechanical characteristics even with the use of an amorphous thermoplastic resin as a matrix resin.

[Examples]

Hereinafter, the present invention will be described in more detail with reference to Examples, but the present invention is not limited to these.

Materials

Matrix resins used in each example are shown below.

- PEI (A-1): Polyetherimide resin (trade name "Ultem CRS5001" manufactured by SABIC Innovative Plastics, MVR: 7 $cm^3$/10 minutes; set temperature: 360°C, load: 5 kg, glass transition temperature: 225°C) having the repeating

unit (a)

- PEI (A-2): Polyetherimide resin (trade name "Ultem CRS5011" manufactured by SABIC Innovative Plastics, MVR: 20 $cm^3$/10 minutes; set temperature: 360°C, load: 5 kg, glass transition temperature: 225°C) having the repeating unit (a)
- PEI (B): Polyetherimide resin (trade name "Ultem CRS1000" manufactured by SABIC Innovative Plastics, MVR: 13 $cm^3$/10 minutes; set temperature: 360°C, load: 5 kg, glass transition temperature: 217°C) having the repeating unit (b)

Measurement and Evaluation

Evaluation of Toughness: Measurement of Tensile Elongation at Break

A test piece (thickness 0.05 mm) was produced by cutting a film to dimensions of 100 mm length (TD) by 15 mm width (MD).

The tensile elongation at break of the test piece (film) in a direction (TD direction) perpendicular to a longitudinal direction (MD direction) was measured under the conditions of a temperature of 23°C, a relative humidity of 50%, a tensile speed of 200 mm/minute, and a grip spacing of 50 mm using a universal material testing machine (product name "MODEL 205" manufactured by INTESCO Co., Ltd.) according to JIS K 7127.

The tensile elongation at break of five test pieces was measured, and the average value thereof was defined as the tensile elongation at break (T1) of the film before immersing into a hydraulic oil.

Calculation of Tensile Elongation Retention Rate

A test piece (0.05 mm thickness) was produced by cutting a film into a size of 100 mm length (TD) by 15 mm width (MD).

An oil (trade name "Skydrol LD4" manufactured by Eastman Chemical Company) containing 55 to 65 mass% of tributyl phosphate was used as a hydraulic oil.

After the test piece was immersed for 1,000 hours in the hydraulic oil at 23°C, the test piece was taken out from the hydraulic oil and left for 24 hours in an atmosphere of 23°C. Next, the tensile elongation at break of the test piece (film) after leaving in a direction (TD direction) perpendicular to a longitudinal direction (MD direction) was measured under the conditions of a temperature of 23°C, a relative humidity of 50%, a tensile speed of 100 mm/minute, and a grip spacing of 50 mm using a universal material testing machine (product name "MODEL 205" manufactured by INTESCO Co., Ltd.) according to JIS K 7127.

The tensile elongation at break of five test pieces was measured, and the average value thereof was defined as the tensile elongation at break (T2) of the film after immersing into the hydraulic oil to obtain a tensile elongation retention rate by Expression (1).

$$\text{Tensile Elongation Retention Rate} = (\text{Tensile Elongation at Break (T2)}/\text{Tensile Elongation at Break (T1)}) \times 100 \quad ...\ (1)$$

Evaluation of Mechanical Characteristics: Measurement of 90°-Bending Strength

A molded product in which prepregs were laminated so that all fiber directions were in a direction of 0° was cut to dimensions of 50 mm length (orthogonal to fibers) by 12.7 mm width (parallel to fibers) to produce test pieces (2 mm thickness).

According to ASTM D790, a three-point bending test was performed under the conditions of a ratio Lid of 16, where L represents an inter-support distance and d represents the thickness of the test piece, and a crosshead speed of $(L^2 \times 0.01)/(6 \times d)$ using a universal testing machine (product name "INSTRON 5565" manufactured by INSTRON) with a three-point bending tool (indenter R = 5.0 mm, support R = 3.2 mm) installed, and the 90°-bending strength was measured.

The 90°-bending strengths of six test pieces were measured, and the average value thereof was defined as the 90°-bending strength of the molded product. Evaluation of Mechanical Characteristics: Measurement of In-Plane Shear Strength Retention Rate

A molded product in which prepregs were laminated so that fiber directions were in a direction of +45° and in a direction of -45° was cut to dimensions of 230 mm length by 25.4 mm width to produce 12 test pieces (3 mm thickness).

The in-plane shear strength was measured using a universal testing machine (product name "INSTRON 5882" manufactured by INSTRON) according to ASTM D3518.

The in-plane shear strengths of six test pieces were measured, and the average value thereof was defined as the in-plane shear strength (T3) of the molded product.
After the remaining six test pieces were immersed for 500 hours in a hydraulic oil at 23°C, the test pieces were taken out from the hydraulic oil and left for 24 hours in an atmosphere of 23°C. After that, the in-plane shear strength was measured using a universal testing machine (product name "INSTRON 5882" manufactured by INSTRON) according to ASTM D3518. The in-plane shear strengths of the six test pieces were measured, and the average value thereof was defined as the in-plane shear strength (T4) of the molded product after immersing in the hydraulic oil to obtain an in-plane shear strength retention rate by Expression (2).
In-plane Shear Strength Retention Rate = (In-Plane Shear Strength (T4) After

Immersing in Hydraulic Oil/In-Plane Shear Strength (T3)) × 100 ... (2)

Example 1

Producing of Prepreg

A matrix resin obtained by dry-blending PEI (A-1) with PEI (A-2) at a mass ratio of 90: 10 was kneaded at 380°C in a single-screw extruder having a diameter of 40 mm, and then extrusion-molded into a film shape using a T-die and rapidly cooled with a casting roll at about 200°C to produce a film having a thickness of 0.05 mm.
The tensile elongation at break of the obtained film was measured, and the tensile elongation retention rate was obtained. The result is shown in Table 1.
The previously produced film was laminated on a carbon fiber sheet in which PAN-based carbon fibers (trade name "MR50R" manufactured by Mitsubishi Chemical Corporation, 570 tex, 12,000 strands) were oriented in uni-direction, and the film was melted by heating and impregnated into the carbon fiber sheet to produce a prepreg.
The obtained prepreg had a thickness of 0.2 mm. The volume content (Vf) of the carbon fibers measured according to ASTM D3171 was 60 vol%.

Producing of Molded Product

10 pieces obtained by cutting the prepreg to dimensions of 118 mm by 198 mm were laminated so that all fiber directions were in a direction of 0°, and thus a laminate having a thickness of 2 mm was produced.
The obtained laminate was disposed in a lower mold of a metal mold made of steel, and an upper mold was closed. Then, the metal mold was pre-heated to 340°C in about 10 minutes inside a pressing device set at 380°C in a heating-cooling two-stage press (product name "50-ton press" manufactured by Shinto Metal Industries, Ltd.), and then compression molding was performed for 30 minutes under the molding condition of 5 MPa. Thereafter, the metal mold was transported to a press board face whose temperature was adjusted to 80°C, and the temperature was lowered to 200°C in about 2 minutes to obtain a molded product (2 mm thickness) of 120 mm by 200 mm.
The 90°-bending strength of the obtained molded product was measured. The 90°-bending strength was 116 MPa.

Example 2

Prepregs and a molded product were produced in the same manner as in Example 1, except that PEI (A-2) was not used, and various measurements and evaluations were performed. The result is shown in Table 1.
The 90°-bending strength of the obtained molded product was measured. The 90°-bending strength was 101 MPa.
In addition, 16 pieces obtained by cutting the prepreg to dimensions of 178 mm by 328 mm were laminated so as to form a configuration of [+45/-45] 4s, and thus a laminate having a thickness of 3 mm was produced.
The obtained laminate was disposed in a lower mold of a metal mold made of steel, and an upper mold was closed. Then, the metal mold was pre-heated to 340°C in about 10 minutes inside a pressing device set at 380°C in a heating-cooling two-stage press (product name "50-ton press" manufactured by Shinto Metal Industries, Ltd.), and then compression molding was performed for 30 minutes under the molding condition of 5 MPa. Thereafter, the metal mold was transported to a press board face whose temperature was adjusted to 80°C, and the temperature was lowered to 200°C in about 2 minutes to obtain a molded product (3 mm thickness) of 180 mm by 330 mm.
The in-plane shear strength retention rate of the obtained molded product was measured. The result is shown in Table 1.

Example 3

Prepregs and a molded product were produced in the same manner as in Example 2, except that PEI (A-1) and PEI (A-2) were dry-blended at a mass ratio of 80:20, and various measurements and evaluations were performed. The result is shown in Table 1.

The 90°-bending strength of the obtained molded product was measured. The 90°-bending strength was 100 MPa.

Example 4

Prepregs and a molded product were produced in the same manner as in Example 1, except that PEI (A-1) and PEI (A-2) were dry-blended at a mass ratio of 50:50, and various measurements and evaluations were performed. The result is shown in Table 1.

The 90°-bending strength of the obtained molded product was measured. The 90°-bending strength was 102 MPa.

Example 5

Prepregs and a molded product were produced in the same manner as in Example 2, except that PEI (B) was used as a matrix resin, and various measurements and evaluations were performed. The result is shown in Table 1.

The 90°-bending strength of the obtained molded product was measured. The 90°-bending strength was 113 MPa.

[Table 1]

| | | Example 1 | Example 2 | Example 3 | Example 4 | Example 5 |
|---|---|---|---|---|---|---|
| Matrix Resin [mass%] | PEI (A-1) | 90 | 100 | 80 | 50 | 0 |
| | PEI (A-2) | 10 | 0 | 20 | 50 | 0 |
| | PEI (B) | 0 | 0 | 0 | 0 | 100 |
| Characteristics of Film | Tensile Elongation Retention Rate [%] | 82.5 | 93.7 | 36.9 | 25.7 | 11 |
| Characteristics of Molded Product | In-Plane Shear Strength Retention Rate [%] | - | 92 | 98 | - | 63 |

As is obvious from Table 1, the films obtained by molding the matrix resins used in Examples 1 to 4 had more excellent chemical resistance than the film obtained by molding the matrix resin used in Example 5. The in-plane shear strength retention rates in Examples 2 and 5 were the results that reflected the chemical resistance of the film.

The in-plane shear strength retention rate in Example 3 in which PEI (A-1) and PEI (A-2) were blended was particularly high. It is thought that in Examples 1 and 4, while changes in physical properties due to the influence of swelling and the like are suppressed due to the presence of PEI (A-1), voids are reduced in the molded product (fiber-reinforced composite article) due to the presence of PEI (A-2), and thus the in-plane shear strength retention rates in Examples 1 and 4 are higher than those in Examples 2 and 5.

In Example 3, the value of the tensile elongation retention rate of the film was lower than in Example 2, but the value of the in-plane shear strength retention rate of the molded product was higher than in Example 2. Therefore, the molded product exhibited excellent chemical resistance.

As described above, with the prepreg according to the present invention, it is possible to achieve both high chemical resistance and mechanical properties.

[Industrial Applicability]

With a fiber-reinforced thermoplastic resin prepreg according to the present invention, it is possible to obtain a molded product having excellent chemical resistance and mechanical characteristics even with the use of an amorphous thermoplastic resin as a matrix resin. Accordingly, the fiber-reinforced thermoplastic resin prepreg and the molded

product according to the present invention are useful as a member to be used in sporting goods, automobiles, aircrafts, industrial equipment, and the like.

[Reference Signs List]

10: producing apparatus
11: carbon fiber substrate
12: film
13: heater
14: release film
15: hot plate press
16: cooling press
17: prepreg
18: roll
19: pressing roller

## Claims

**1.** A prepreg comprising:

a matrix resin containing a polyetherimide resin (A) having a repeating unit represented by General Formula (a); and
carbon fibers;
wherein the matrix resin satisfies Condition (1) including

(i) a film is produced by extrusion-molding the matrix resin into a film shape,
(ii) a tensile elongation at break (T1) of the film in a direction perpendicular to a longitudinal direction is measured according to JIS K 7127,
(iii) separately, the film produced in (i) is immersed for 1,000 hours in an oil containing 55 to 65 mass% of tributyl phosphate at 23°C, and then a tensile elongation at break (T2) of the film in the direction perpendicular to the longitudinal direction is measured according to JIS K 7127, and
(iv) a tensile elongation retention rate obtained by Expression (1) is 15% or greater and 90% or less,

$$\text{Tensile Elongation Retention Rate} = (\text{Tensile Elongation at Break (T2)}/\text{Tensile Elongation at Break (T1)}) \times 100 \quad \ldots (1),$$

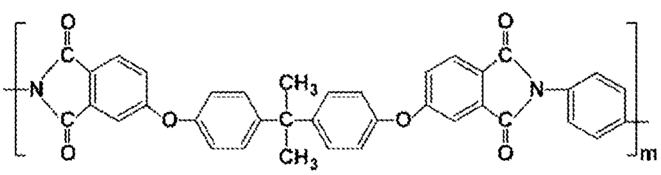

· · · (a)

in Formula (a), m is a number of 5 to 1,500.

**2.** The prepreg according to Claim 1,
wherein the polyetherimide resin (A) includes a polyetherimide resin (A-1) having a melt volume rate of 3 to 10 $cm^3$/10 minutes at a set temperature of 360°C and a load of 5 kg as measured according to ISO 1133.

**3.** The prepreg according to Claim 2,
wherein a content of the polyetherimide resin (A-1) is 85 mass% or greater with respect to a total mass of the matrix resin.

**4.** The prepreg according to Claim 2 or 3, wherein a content of the polyetherimide resin (A-1) is 95 mass% or less with respect to a total mass of the matrix resin.

**5.** The prepreg according to any one of Claims 1 to 4, wherein the polyetherimide resin (A) includes a polyetherimide resin (A-2) having a melt volume rate of 15 to 30 $cm^3$/10 minutes at a set temperature of 360°C and a load of 5 kg as measured according to ISO 1133.

**6.** The prepreg according to Claim 5, wherein a content of the polyetherimide resin (A-2) is 5 mass% or greater with respect to a total mass of the matrix resin.

**7.** The prepreg according to Claim 5 or 6, wherein a content of the polyetherimide resin (A-2) is 15 mass% or less with respect to a total mass of the matrix resin.

**8.** The prepreg according to any one of Claims 1 to 7, wherein the carbon fibers are continuous fibers.

**9.** A molded product which is obtained by molding the prepreg according to any one of Claims 1 to 8.

**10.** A method of producing a prepreg comprising:

heating a laminate obtained by laminating a film containing an amorphous thermoplastic resin on a carbon fiber substrate to impregnate the carbon fiber substrate with the amorphous thermoplastic resin, wherein the film satisfies Condition (1a) including

(v) a tensile elongation at break (T1) of the film in a direction perpendicular to a longitudinal direction is measured according to JIS K 7127,
(vi) separately, the film is immersed for 1,000 hours in an oil containing 55 to 65 mass% of tributyl phosphate at 23°C, and then a tensile elongation at break (T2) of the film in the direction perpendicular to the longitudinal direction is measured according to JIS K 7127, and
(vii) a tensile elongation retention rate obtained by Expression (1) is 70% or greater,

$$\text{Tensile Elongation Retention Rate} = (\text{Tensile Elongation at Break (T2)}/\text{Tensile Elongation at Break (T1)}) \times 100 \ ... \ (1).$$

**11.** The method of producing a prepreg according to Claim 10, wherein the carbon fiber substrate is a sheet-shaped carbon fiber bundle in which carbon fibers are aligned in uni-direction.

**12.** The method of producing a prepreg according to Claim 10 or 11, wherein the amorphous thermoplastic resin contains a polyetherimide resin.

**13.** The method of producing a prepreg according to Claim 12, wherein the polyetherimide resin includes a polyetherimide resin (A) having a repeating unit represented by General Formula (a),

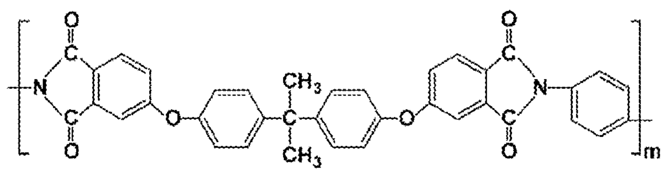

・・・(a)

in Formula (a), m is a number of 5 to 1,500.

**14.** The method of producing a prepreg according to Claim 13,

wherein a content of the polyetherimide resin (A) is 85 mass% or greater with respect to a total mass of the amorphous thermoplastic resin.

**15.** The method of producing a prepreg according to Claim 13 or 14, wherein in the amorphous thermoplastic resin, two or more kinds of the polyetherimide resins (A) having different melt volume rates at a set temperature of 360°C and a load of 5 kg as measured according to ISO 1133 are blended.

**16.** A prepreg comprising:

a matrix resin; and
carbon fibers,
wherein the matrix resin is a blended material of two or more kinds of polyetherimide resins (A) having different melt volume rates at a set temperature of 360°C and a load of 5 kg as measured according to ISO 1133, and having a repeating unit represented by General Formula (a),

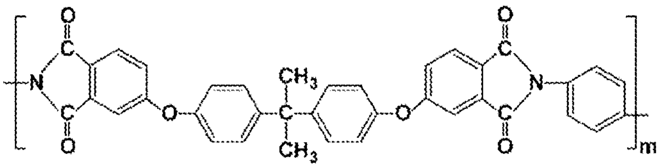

· · · (a)

in Formula (a), m is a number of 5 to 1,500.

**17.** The prepreg according to Claim 16, wherein the matrix resin is a blended material of a polyetherimide resin (A-1) having a melt volume rate of 10 $cm^3$/10 minutes or less at a set temperature of 360°C and a load of 5 kg as measured according to ISO 1133, and having a repeating unit represented by General Formula (a), and a polyetherimide resin (A-2) having a melt volume rate of 15 $cm^3$/10 minutes or greater at a set temperature of 360°C and a load of 5 kg as measured according to ISO 1133, and having a repeating unit represented by General Formula (a),

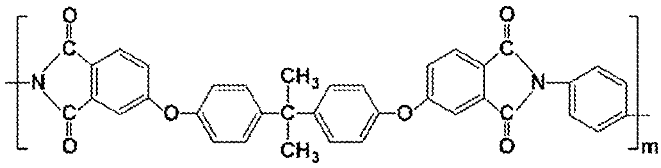

· · · (a)

in Formula (a), m is a number of 5 to 1,500.

**18.** The prepreg according to Claim 16 or 17, wherein a sheet-shaped carbon fiber bundle in which the carbon fibers are aligned in uni-direction is impregnated with the matrix resin.

**19.** The prepreg according to any one of Claims 16 to 18, wherein a content of the polyetherimide resin (A) is 85 mass% or greater with respect to a total mass of the matrix resin.

**20.** A resin composition, wherein two or more kinds of polyetherimide resins (A) having different melt volume rates at a set temperature of 360°C and a load of 5 kg as measured according to ISO 1133, and having a repeating unit represented by General Formula (a) are blended,

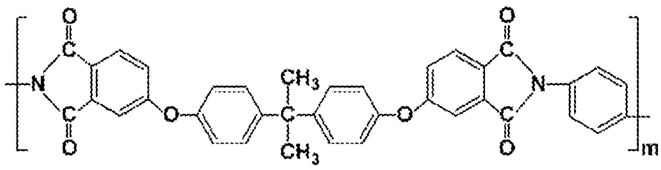

· · · (a)

in Formula (a), m is a number of 5 to 1,500.

**21.** The resin composition according to Claim 20,
wherein in the polyetherimide resin (A), a polyetherimide resin (A-1) having a melt volume rate of 3 to 10 $cm^3$/10 minutes at a set temperature of 360°C and a load of 5 kg as measured according to ISO 1133 is blended.

**22.** The resin composition according to Claim 21,
wherein an amount of the polyetherimide resin (A-1) is 85 mass% or greater with respect to a total mass of the resin composition.

**23.** A film comprising:
the resin composition according to any one of Claims 20 to 22.

FIG. 1

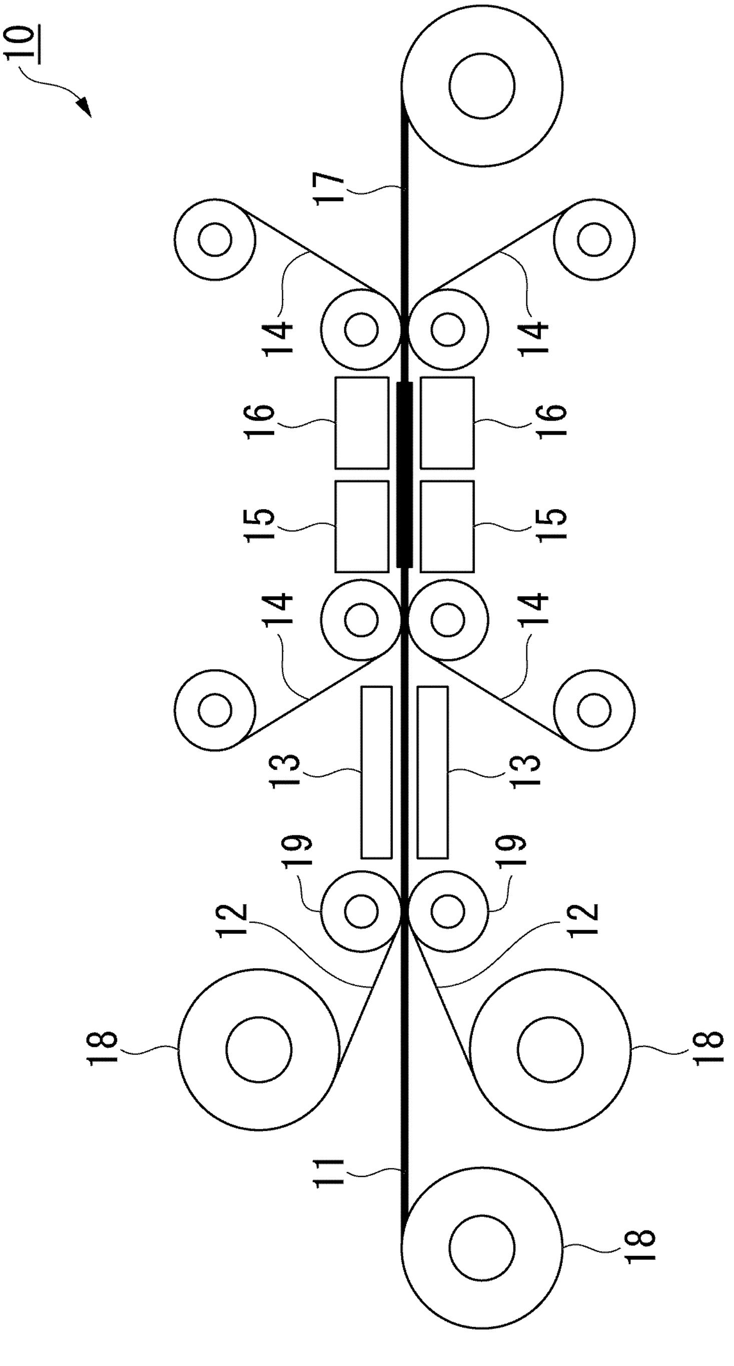

## INTERNATIONAL SEARCH REPORT

International application No.
**PCT/JP2022/008069**

**A. CLASSIFICATION OF SUBJECT MATTER**

***C08J 5/04***(2006.01)i; ***C08G 73/10***(2006.01)i; ***C08L 79/08***(2006.01)i
FI: C08J5/04 CFG; C08G73/10; C08L79/08

According to International Patent Classification (IPC) or to both national classification and IPC

**B. FIELDS SEARCHED**

Minimum documentation searched (classification system followed by classification symbols)

C08J5/04-5/10; C08G5/24; B29B11/16; B29B15/08-15/14; C08L1/00-101/14; C08G73/00-73/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/168009 A1 (MITSUBISHI CHEM CORP) 06 September 2019 (2019-09-06) claims, table 1, examples | 1-23 |
| A | JP 2002-226699 A (MITSUBISHI PLASTICS, INC.) 14 August 2002 (2002-08-14) claims, table 1, examples | 1-23 |
| A | JP 2019-510860 A (SABIC GLOBAL TECHNOLOGIES B.V) 18 April 2019 (2019-04-18) entire text, all drawings | 1-23 |
| A | WO 2020/004638 A1 (MITSUBISHI CHEM CORP) 02 January 2020 (2020-01-02) entire text, all drawings | 1-23 |
| A | JP 2002-212314 A (MITSUBISHI PLASTICS, INC.) 31 July 2002 (2002-07-31) entire text | 1-23 |
| A | JP 2007-51256 A (MITSUBISHI PLASTICS, INC.) 01 March 2007 (2007-03-01) entire text, all drawings | 1-23 |
| A | JP 2002-105221 A (MITSUBISHI PLASTICS, INC.) 10 April 2002 (2002-04-10) entire text, all drawings | 1-23 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 March 2022** | **12 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/008069**

| Patent document cited in search report | Publication date (day/month/year) | Patent family member(s) | Publication date (day/month/year) |
|---|---|---|---|
| WO 2019/168009 A1 | 06 September 2019 | US 2020/0377681 A1<br>claims, examples, table 1<br>EP 3760666 A1 | |
| JP 2002-226699 A | 14 August 2002 | (Family: none) | |
| JP 2019-510860 A | 18 April 2019 | US 2019/0100623 A1<br>claims, examples, figures<br>EP 3433299 A1<br>CN 110139888 A | |
| WO 2020/004638 A1 | 02 January 2020 | US 2021/0108042 A1<br>claims, examples<br>EP 3816212 A1 | |
| JP 2002-212314 A | 31 July 2002 | US 2004/0096678 A1<br>claims, examples<br>EP 1369450 A1<br>TW 251604 B<br>CN 1486341 A | |
| JP 2007-51256 A | 01 March 2007 | (Family: none) | |
| JP 2002-105221 A | 10 April 2002 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021029143 A
- JP 2004107626 A
- JP 2005239843 A